# EUROPEAN PATENT APPLICATION

(11) **EP 2 530 994 A1**
(43) Date of publication of application: **05.12.2012**
(21) Application number: 11736986.8
(22) Date of filing: 25.01.2011
(51) Int. Cl.: H04W 74/02

(54) **PROCESSING METHOD AND MOBILE STATION APPARATUS**

(30) Priority: 26.01.2010 JP 2010013892
(71) Applicant: Sharp Kabushiki Kaisha, Osaka-shi, Osaka 545-8522 (JP)
(72) Inventor: YAMADA, Shohei, Osaka 545-8522 (JP); SUZUKI, Shoichi, Osaka 545-8522 (JP); KATO, Yasuyuki, Osaka 545-8522 (JP); NAKASHIMA, Daiichiro, Osaka 545-8522 (JP)
(74) Representative: Müller - Hoffmann & Partner
(86) International application number: PCT/JP2011/051323
(87) International publication number: WO 2011/093273

(57) **Abstract**

A communication system, a mobile station device, a base station device, and a processing method for carrying out processing involved in introducing a contention based uplink efficiently, and carrying out communication promptly are provided. A mobile station device communicating with a base station device in a mobile communication system obtains an uplink grant from the base station device, and when the uplink grant is a normal grant, cancels a pending scheduling request, and when the uplink grant is a grant for a contention based uplink, not canceling the pending scheduling request.

## Description

### TECHNICAL FIELD

The present invention relates to a processing method and a mobile station device allowing processing of a contention based uplink.

### BACKGROUND ART

3GPP (3rd Generation Partnership Project) is directed to evaluating and producing the specification for a mobile phone system based on a network corresponding to the development of W-CDMA (Wideband-Code Division Multiple Access) and GSM (Global System for Mobile communications).

In 3GPP, the W-CDMA scheme is standardized as the 3rd generation cellular mobile communication scheme, and service thereof is sequentially started. In addition, HSDPA (High-Speed Downlink Packet Access) that has the communication speed further improved is standardized, and service thereof is started.

In 3GPP, the evolution in the 3rd generation radio access technology (hereinafter, referred to as LTE (Long Term Evolution) or EUTRA (Evolved Universal Terrestrial Radio Access)) and a wider system bandwidth are employed in the research for a mobile communication system realizing faster data transmission and reception (hereinafter, referred to as LTE-A (LTE-Advanced) or Advanced-EUTRA).

As a downlink communication scheme in EUTRA, there is proposed the OFDMA (orthogonal frequency-division multiple access) scheme for user multiplexing based on subcarriers orthogonal to each other.

In the OFDMA scheme, an adaptive modulation and coding scheme (AMCS) technique based on adaptive radio link control (link adaptation) such as channel coding is applied.

AMCS is the scheme for switching the radio transmission parameter (also referred to as "AMC mode") such as the error coding scheme, the code rate of error correction, data modulation multivalued number according to the channel quality of each mobile station device for the purpose of carrying out high speed packet data transmission efficiently.

The channel quality of each mobile station device is fed back to the base station device using a channel quality indicator (CQI).

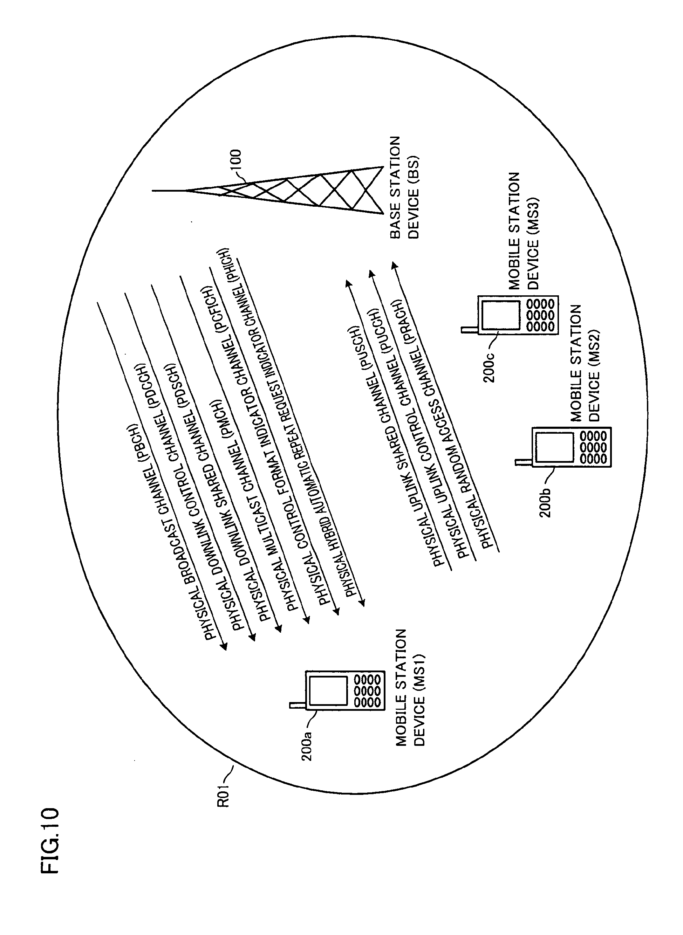

Fig. 10 represents a channel configuration employed in a conventional mobile communication system. This channel configuration is employed in a mobile communication system such as of EUTRA (refer to Non-Patent Literature 1). The mobile communication system shown in Fig. 10 includes a base station device 100, and mobile station devices 200a, 200b and 200c. Range R01 in Fig. 10 represents the range where base station device 100 can communicate. Base station device 100 carries out communication with a mobile station device present in this range R01.

In the downlink for transmitting signals from base station device 100 to mobile station devices 200a-200c in EUTRA, a physical broadcast channel (PBCH), a physical downlink control channel (PDCCH), a physical downlink shared channel (PDSCH), a physical multicast channel (PMCH), a physical control format indicator channel (PCFICH), and a physical hybrid automatic repeat request indicator channel (PHICH) are used.

In the uplink for transmitting signals from mobile station devices 200a-200c to base station device 100 in EUTRA, a physical uplink shared channel (PUSCH), a physical uplink control channel (PUCCH), and a physical random access channel (PRACH) are used.

In LTE-A, the basic system of EUTRA is followed. In contrast to a continuous frequency band used in a general system, there is proposed the multiple usage of a plurality of continuous or discontinuous frequency bands (hereinafter, referred to as carrier component or component carrier) for operation as a unitary wide frequency band (wide system band) in LTE-A. This technique is also referred to as spectrum aggregation or carrier aggregation. Each component carrier occupies a predetermined bandwidth among the system band that is the available frequency range. A plurality of such component carriers are used to constitute one system band. At each component carrier, a LTE or LTE-A mobile station device can be operated. Furthermore, in order to utilize the frequency band allotted to the mobile communication system in a more flexible manner, there is proposed having independent frequency bandwidths for the frequency band used for downlink communication and the frequency band used for uplink communication.

In LTE-A, research on introducing a new access scheme for reducing latency is now pursued. Contention based uplink (CB-Uplink) is one method thereof. This contention based uplink is also referred to as Contention Based Access. The contention based uplink that is similar to random access utilizing a physical random access channel (PRACH) in terms of potential contention (collision) differs in the following aspects. There is difference between random access and contention based uplink in that the resource of random access is a physical random access channel (PRACH) indicated in the broadcasted system information whereas the resource of the contention based uplink is a physical uplink shared channel (PUSCH) scheduled at the physical downlink control channel (PDCCH). Furthermore, for message 3 (Msg3) in random access processing, a physical uplink shared channel (PUSCH) is used. More specifically, a mobile base station transmits a preamble using a physical random access channel (PRACH), and then transmits uplink data using a physical uplink shared channel (PUSCH) with still the possibility of collision. In a contention based uplink, the base station device schedules the physical uplink shared channel (PUSCH) that has the possibility of collision using a physical downlink control channel (PDCCH) without the transmission of a preamble using a physical random access channel (PRACH). The mobile base station transmits uplink data using the scheduled physical uplink shared channel (PUSCH). In other words, the random access procedure or random access preamble transmission is not required for the contention based uplink.

The LTE is based on access utilizing a scheduling request. Specifically, a mobile base station uses a physical uplink control channel (PUCCH) or a physical random access channel (PRACH) to request a base station device of a resource for transmitting uplink data. It is to be noted that the contention based uplink differs from the access method of requiring a scheduling request since the mobile station device can directly transmit uplink data without having to perform scheduling request processing. A physical uplink shared channel (PUSCH) is absent of a guard time, differing from a physical random access channel (PRACH), so that only a mobile station device that has an effective uplink timing alignment can gain access by the contention based uplink. The effective period of the uplink time alignment starts from reception of uplink timing information (timing advance command) until an elapse of a predetermined period (also including infinity).

### CITATION LIST

### NON PATENT LITERATURE

NPL 1: 3GPP TS (Technical Specification) 36.321, V9, 1.0 (2010-01), Technical Specification Group Radio Access Network, Evolved Universal Terrestrial Radio Access (E-UTRA); Medium Access Control (MAC) protocol specification; (Release 9)
NPL 2: R2-096759, Details of latency reduction alternatives, Ericsson, 9-13 November, 2009
NPL 3: R2-094825, Latency improvement comparison, Ericsson, 24-28 August, 2009
NPL 4: R2-093812, Contention based uplink transmission, Ericsson, 29 June -03 July, 2009
NPL 5: R2-100215, The handling of CB uplink transmission, ETRI, 18-22 Jan. 2010
NPL 6: R2-100174, Discussion on the Retransmission of Contention-Based Transmission, MediaTek, ITRI, 18-22 Jan. 2010
NPL 7: R2-100493, On contention based access, Samsung, 18-22 Jan. 2010

### SUMMARY OF INVENTION

### TECHNICAL PROBLEM

The mobile communication systems conventionally known were silent about the distinction in usage between the scheduling request and contention based uplink such as which is to be given priority as well as when and which is to be selected. Furthermore, in association with the introduction of the contention based uplink, there was a problem that the method of organizing the buffer status report (BSR) handled in the scheduling request processing is rendered complicated.

There was also the problem that, in association with introduction of the contention based uplink, control is rendered complicated in the case where there is a mixture of transmission by a regular uplink and transmission by a contention based uplink.

In view of the foregoing, an object of the present invention is to provide a processing method and a mobile station device that can carry out communication more promptly by performing the processing in association with introducing a contention based uplink more efficiently.

### SOLUTION TO PROBLEM

The first technical aspect of the present invention is directed to a mobile station device communicating with a base station device in a mobile communication system, the mobile station device adapted to: obtain an uplink grant from the base station device; and when said uplink grant is a normal grant, cancel a pending scheduling request, and when said uplink grant is a grant for a contention based uplink, not cancel said pending scheduling request.

The second technical aspect of the present invention is directed to a mobile station device communicating with a base station device in a mobile communication system, the mobile station device adapted to: obtain an uplink grant from the base station device; when said uplink grant is a normal grant, cancel a pending scheduling request, and when said uplink grant is a grant for a contention based uplink, not cancel said pending scheduling request; and when contention resolution of said contention based uplink succeeds, cancel said pending scheduling request.

The third technical aspect of the present invention is directed to a processing method at a mobile station device communicating with a base station device in a mobile communication system, comprising the steps of: said mobile station device obtaining an uplink grant from the base station device; when said uplink grant is a normal grant, canceling a triggered buffer status report, and when said uplink grant is a grant for a contention based uplink, not canceling said triggered buffer status report.

The fourth technical aspect of the present invention is directed to a processing method at a mobile station device communicating with a base station device in a mobile communication system, comprising the steps of: said mobile station device obtaining an uplink grant from the base station device; and when said uplink grant is a normal grant, canceling a pending scheduling request, and when said uplink grant is a grant for a contention based uplink, not canceling said pending scheduling request.

The fifth technical aspect of the present invention is directed to a processing method at a mobile station device communicating with a base station device in a mobile communication system, comprising the steps of: said mobile station device obtaining an uplink grant from the base station device; when said uplink grant is a normal grant, canceling a pending scheduling request, and when said uplink grant is a grant for a contention based uplink, not canceling said pending scheduling request; and when contention resolution of said contention based uplink succeeds, canceling said pending scheduling request.

The sixth technical aspect of the present invention is directed to a mobile station device communicating with a base station device in a mobile communication system, said mobile station device adapted to: obtain an uplink grant from the base station device; and when said uplink grant is a normal grant, cancel a triggered buffer status report, and when said uplink grant is a grant for a contention based uplink, not canceling said triggered buffer status report.

### ADVANTAGEOUS EFFECTS OF INVENTION

According to the present invention, communication can be carried out more promptly by carrying out more efficiently the processing involved in introducing a contention based uplink.

### BRIEF DESCRIPTION OF DRAWINGS

Fig. 1 represents a configuration of a downlink channel used in a communication system according to an embodiment of the present invention.
Fig. 2 represents a configuration of an uplink channel used in the communication system according to the embodiment of the present invention.
Fig. 3 is a schematic block diagram representing a configuration of a base station device according to the embodiment of the present invention.
Fig. 4 is a schematic block diagram representing a configuration of a mobile station device according to the embodiment of the present invention.
Fig. 5 represents an example of a network configuration according to the embodiment of the present invention.
Fig. 6 represents an example of PUCCH scheduling request processing according to the embodiment of the present invention.
Fig. 7 represents an example of random access processing according to the embodiment of the present invention.
Fig. 8 represents an example of contention based uplink processing according to the embodiment of the present invention.
Fig. 9 represents an example of scheduling request processing according to the embodiment of the present invention.
Fig. 10 represents a configuration of a channel employed in a conventional communication system.

### DESCRIPTION OF EMBODIMENTS

Embodiments of the present invention will be described in detail hereinafter with reference to the drawings. In the drawings, the same or corresponding elements have the same reference characters allotted, and description thereof will not be repeated.

A mobile communication system according to an embodiment of the present invention includes one or more base station devices (base station) 100, and one or more mobile station devices (mobile station) 200. Radio communication is carried out between base station device 100 and mobile station device 200. One base station device 100 constitutes one or more cells, and one or more mobile station devices 200 can be accommodated in one cell.

### <Channel Configuration>

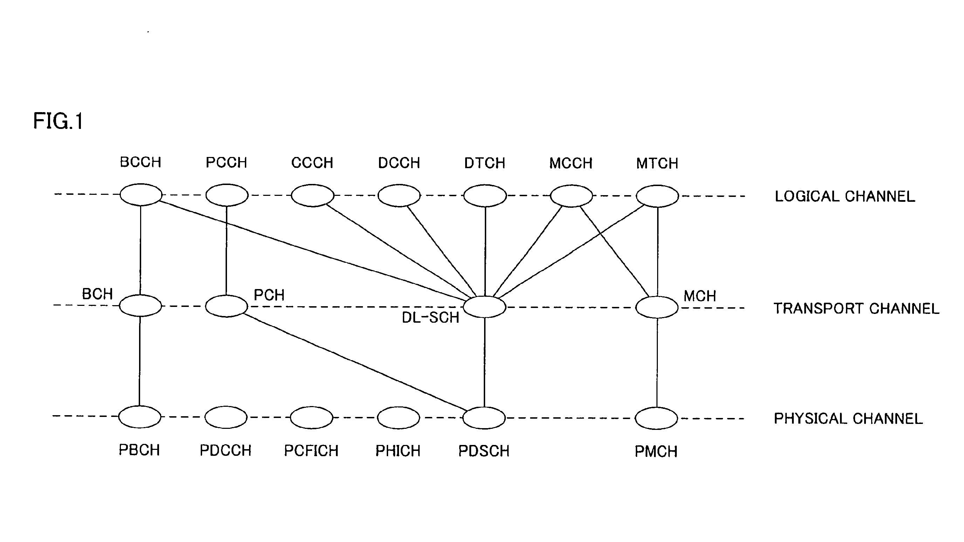

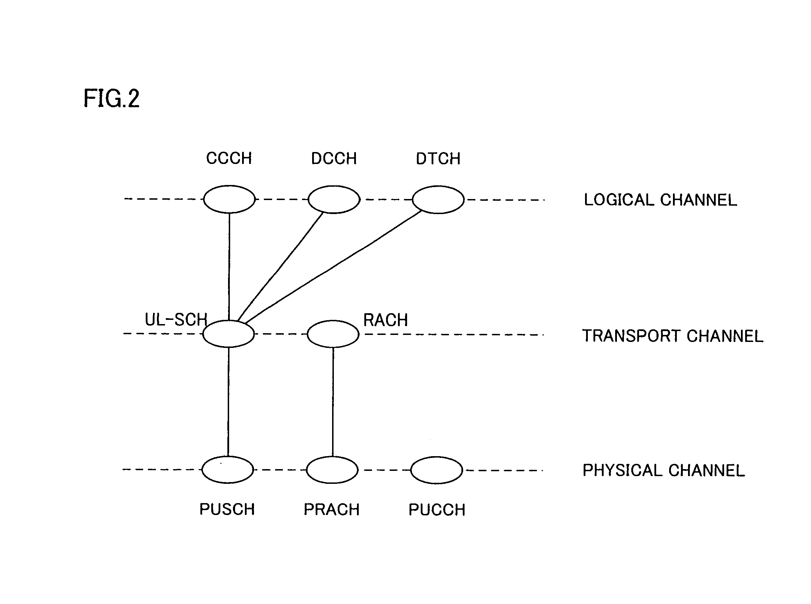

Fig. 1 represents a configuration of a downlink channel used in a communication system according to the embodiment of the present invention. Fig. 2 represents a configuration of an uplink channel used in the communication system according to the embodiment of the present invention. Each of the downlink channel shown in Fig. 1 and the uplink channel shown in Fig. 2 is constituted of a logical channel, a transport channel, and a physical channel.

The logical channel defines the type of data transmission service transmitted and received with a medium access control (MAC) layer. The transport channel defines what characteristics the data transmitted through the radio interface have and how that data is transmitted. The physical channel carries a transport channel.

The logical channel of a downlink includes a broadcast control channel (BCCH), a paging control channel (PCCH), a common control channel (CCCH), a dedicated control channel (DCCH), a dedicated traffic channel (DTCH), a multicast control channel (MCCH), and a multicast traffic channel (MTCH). The uplink logical channel includes a common control channel (CCCH), a dedicated control channel (DCCH), and a dedicated traffic channel (DTCH).

The transport channel of a downlink includes a broadcast channel (BCH), a paging channel (PCH), a downlink shared channel (DL-SCH) and a multicast channel (MCH). The transport channel of an uplink includes an uplink shared channel (UL-SCH), and a random access channel (RACH).

The physical channel of a downlink includes a physical broadcast channel (PBCH), a physical downlink control channel (PDCCH), a physical control format indicator channel (PCFICH), a physical hybrid automatic repeat request indicator channel (PHICH), a physical downlink shared channel (PDSCH), and a physical multicast channel (PMCH). The physical channel of an uplink includes a physical uplink shared channel (PUSCH), a physical random access channel (PRACH), and a physical uplink control channel (PUCCH).

Through these channels, data is transmitted and received between base station device 100 and mobile station device 200, as shown in Fig. 10 described in association with conventional art.

The logical channel will be described in further detail hereinafter.

A broadcast control channel (BCCH) is a downlink channel used to broadcast system information.

A paging control channel (PCCH) is a downlink channel used for transmitting paging information, and is used when the network does not know the cell location of mobile station device 200.

The common control channel (CCCH) is used to transmit control information between mobile station device 200 and the network, and is used by mobile station device 200 not connected with the network in radio resource control (RRC).

The dedicated control channel (DCCH) is a point-to-point bidirectional channel, used for transmitting individual control information between mobile station device 200 and the network. The dedicated control channel (DCCH) is used by a mobile station device 200 in RRC-connection.

The dedicated traffic channel (DTCH) is a point-to-point bidirectional channel, dedicated to one mobile station device 200, and used to transfer user information (unicast data).

The multicast control channel (MCCH) is a downlink channel used to transmit MBMS (Multimedia Broadcast Multicast Service) control information from the network to mobile station device 200 in a point-to-multipoint transmission manner. This channel is used in MBMS service providing the service in a point-to-multipoint manner.

The transmission method of MBMS service includes single-cell point-to-multipoint transmission (SCPTM), and multimedia broadcast multicast service single frequency network (MBSFN) transmission. SCPTM transmission is a method providing MBMS service through one base station device 100. MBSFN transmission is a concurrent transmission technique realized by transmitting a waveform (signal) that can be identified simultaneously from a plurality of cells.

The multicast control channel (MCCH) is used in one or a plurality of multicast traffic channels (MTCH). The MTCH is a downlink channel used for transmitting traffic data (MBMS transmission data) in a point-to-multipoint manner from the network to mobile station device 200.

The multicast control channel (MCCH) and multicast traffic channel (MTCH) are used only by mobile station device 200 receiving MBMS.

The system information organized at RRC is broadcasted using a broadcast control channel (BCCH). Alternatively, the system information is presented from base station device 100 to each mobile station device 200 using a common control channel (CCCH) and/or RRC signaling of a dedicated control channel (DCCH).

The transport channel will be described hereinafter.

In a broadcast channel (BCH), data is broadcasted to the cells entirely by a fixed transmission format defined in advance. In a downlink shared channel (DL-SCH), a hybrid automatic repeat request (HARQ), dynamic adaptive radio link control, discontinuous reception (DRX), and MBMS transmission are supported. In a downlink shared channel (DL-SCH), data is broadcasted to the cells entirely.

In a downlink shared channel (DL-SCH), beam forming is available, and dynamic resource allocation as well as quasi-static resource allocation is supported. In a paging channel (PCH), discontinuous reception (DRX) is supported, and data is broadcasted to the cells entirely.

A paging channel (PCH) is mapped to a physical resource dynamically used relative to a traffic channel or other control channels, i.e. to a physical downlink shared channel (PDSCH).

In a multicast channel (MCH), data is broadcasted to the cells entirely. In a multicast channel (MCH), quasi-static resource allocation such as combining MBMS single frequency network (MBSFN) of MBMS transmission from a plurality of cells and a time frame using extended cyclic prefix (CP) are supported.

In an uplink shared channel (UL-SCH), a HARQ and dynamic adaptive radio link control are supported. In an uplink shared channel (UL-SCH), beam forming is available, and dynamic resource allocation as well as quasi-static resource allocation is supported. In a random access channel (RACH), there is a risk of collision since the transmitted control information is limited.

The physical channel will be described hereinafter.

In a physical broadcast channel (PBCH), a broadcast channel (BCH) is mapped at an interval of 40 millimeters. The timing of 40 milliseconds is under blind detection. In other words, explicit signaling does not have to be carried out for presenting the timing. A subframe including a physical broadcast channel (PBCH) can decode information by just that subframe alone (in other words, self-decodable).

A physical downlink control channel (PDCCH) is used to notify mobile station device 200 about the resource allocation of a downlink shared channel (PDSCH), hybrid automatic repeat request (HARQ) information for downlink data, and uplink transmission permission (uplink grant) that is the resource allocation of a physical uplink shared channel (PUSCH).

A physical downlink shared channel (PDSCH) is used to transmit downlink data or paging information. A physical multicast channel (PMCH) is used to transmit a multicast channel (MCH). In a physical multicast channel (PMCH), a downlink reference signal, an uplink reference signal, and a physical downlink synchronizing signal are arranged.

A physical uplink shared channel (PUSCH) is used mainly to transmit uplink data (UL-SCH). In the case where base station device 100 schedules a mobile station device 200, a channel feedback report (a channel quality indicator (CQI) of the downlink, a precoding matrix indicator (PMI), and a rank indicator (RI)), as well as acknowledgement (ACK) and negative acknowledgement (NACK) of a HARQ for a downlink transmission are also transmitted using a physical uplink shared channel.

A physical random access channel (PRACH) is used to transmit a random access preamble, and has a guard time set. A physical uplink control channel (PUCCH) is used to transmit a channel feedback report (CQI, PMI, RI), a scheduling request (SR), the ACK/NACK of a HARQ for a downlink transmission, and the like.

A physical control format indicator channel (PCFICH) is used to notify mobile station device 200 about the number of OFDM symbols used for the physical downlink control channel (PDCCH). The data is transmitted in subframe units.

A physical hybrid automatic repeat request indicator channel (PHICH) is used to transmit the ACK/NACK of a HARQ for an uplink transmission.

A downlink reference signal (DL-RS) is a pilot signal transmitted for every cell at a predetermined electric power. A downlink reference signal is repeated periodically at a predetermined time interval (for example, 1 frame). Mobile station device 200 receives a downlink reference signal at a predetermined time interval and measures the reception quality to determine the reception quality for every cell. A downlink reference signal is also used as a reference signal for demodulating downlink data transmitted at the same time as the downlink reference signal. Any sequence can be used as a downlink reference signal as long as it can be identified in a one-to-one correspondence for every cell.

Channel mapping according to the communication system in the present embodiment will be described hereinafter. In a downlink, a transport channel and physical channel are mapped, as shown in Fig. 1.

A broadcast channel (BCH) is mapped to a physical broadcast channel (PBCH). A multicast channel (MCH) is mapped to a physical multicast channel (PMCH). A paging channel (PCH) and a downlink shared channel (DL-SCH) are mapped to a physical downlink shared channel (PDSCH).

A physical downlink control channel (PDCCH), a physical control format indicator channel (PCFICH), and a physical hybrid automatic repeat request indicator channel (PHICH) are used by a physical channel solely.

At an uplink, mapping of a transport channel and a physical channel is carried out, as shown in Fig. 2.

An uplink shared channel (UL-SCH) is mapped to a physical uplink shared channel (PUSCH). A random access channel (RACH) is mapped to a physical random access channel (PRACH). A physical uplink control channel (PUCCH) is used by a physical channel solely.

Furthermore, at a downlink, mapping of a logical channel and a transport channel are carried out, as shown in Fig. 1.

A paging control channel (PCCH) is mapped to a paging channel (PCH). A broadcast control channel (BCCH) is mapped to a broadcast channel (BCH) and a downlink shared channel (DL-SCH). A common control channel (CCCH), a dedicated control channel (DCCH), and a dedicated traffic channel (DTCH) are mapped to a downlink shared channel (DL-SCH). A multicast control channel (MCCH) is mapped to a downlink shared channel (DL-SCH) and a multicast channel (MCH). A multicast traffic channel (MTCH) is mapped to a downlink shared channel (DL-SCH) and a multicast channel (MCH).

A multicast control channel (MCCH) and a multicast traffic channel (MTCH) are mapped to a multicast channel and to a downlink shared channel (DL-SCH) in an MBSFN transmission mode and SCPTM transmission mode, respectively.

At an uplink, mapping of a logical channel and a transport channel is carried out, as shown in Fig. 2.

A common control channel (CCCH), a dedicated control channel (DCCH) and a dedicated traffic channel (DTCH) are mapped to an uplink shared channel (UL-SCH). A random access channel (RACH) is not mapped to any logical channel.

### <Configuration of Radio Frame>

A configuration of a radio frame according to the embodiment of the present invention will be described hereinafter.

Each radio frame has a time width of 10 milliseconds (10 ms), and is identified by a system frame number (SFN). Each subframe has a time width of 1 millisecond (1 ms), and 10 subframes constitute a radio frame.

Each subframe is divided into two slots. When a normal cyclic prefix (normal CP) is used, each downlink slot is constituted of 7 OFDM symbols, whereas each uplink slot is constituted of 7 SC-FDMA (Single Carrier-Frequency-Division Multiple access) symbols or DFT (Discrete Fourier Transform)-Spread-OFDM (Frequency Division Multiple access) symbols (DFT-S-OFDM).

When an extended cyclic prefix (extended CP) is used, each downlink slot is constituted of 6 symbols, whereas the uplink slot is constituted of 6 symbols. The extended cyclic prefix is also referred to as a long CP.

As the time unit for reception by mobile station device 200 through a downlink or for transmission by mobile station device 200 through an uplink, or as the time unit for transmission by base station device 100 through a downlink or for reception by base station device 100 through an uplink, a transmission time interval (TTI) is defined. This TTI is a time interval generally corresponding to 1 subframe (1 ms).

### <Configuration of Base Station Device>

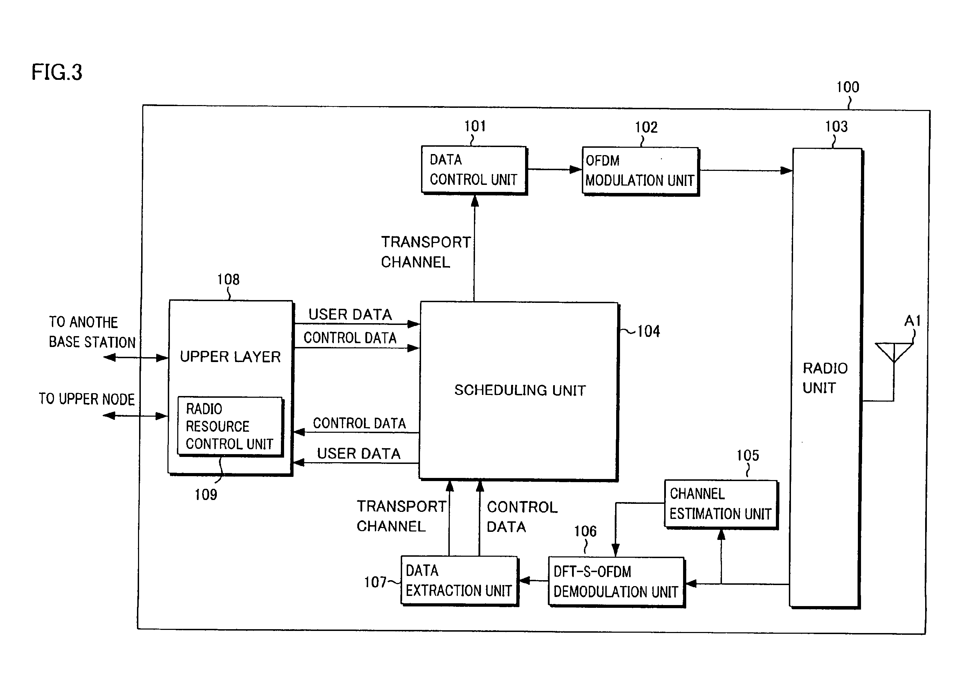

Fig. 3 is a schematic block diagram representing a configuration of a base station device 100 according to the embodiment of the present invention. Base station device 100 includes a data control unit 101, an OFDM modulation unit 102, a radio unit 103, a scheduling unit 104, a channel estimation unit 105, a DFT-Spread-OFDM (DFT-S-OFDM) demodulation unit 106, a data extraction unit 107, an upper layer 108, and an antenna unit A1.

Radio unit 103, scheduling unit 104, channel estimation unit 105, DFT-S-OFDM demodulation unit 106, data extraction unit 107, upper layer 108 and antenna unit A1 constitute a reception unit. Data control unit 101, OFDM modulation unit 102, radio unit 103, scheduling unit 104, upper layer 108 and antenna unit A1 constitute a transmission unit. The transmission unit and reception unit are capable of carrying out processing independently for every component carrier as well as common processing between a plurality of component carriers.

Antenna unit A1, radio unit 103, channel estimation unit 105, DFT-S-OFDM demodulation unit 106, and data extraction unit 107 carry out the processing of an uplink physical layer. Antenna unit A2, data control unit 101, OFDM modulation unit 102 and radio unit 103 carry out the processing of a downlink physical layer.

Data control unit 101 obtains a transport channel from scheduling unit 104. Data control unit 101 maps a transport channel, a signal and channel generated at a physical layer based on the scheduling information from scheduling unit 104 to a physical channel according to the scheduling information from scheduling unit 104. Each of such mapped data is output to OFDM modulation unit 102.

OFDM modulation unit 102 carries out OFDM signal processing such as coding, data modulation, input signal serial/parallel conversion, inverse fast fourier transform (IFFT) processing, insertion of a cyclic prefix (CP) and filtering on the data from data control unit 101 according to the scheduling information from scheduling unit 104 to generate and provide to radio unit 103 an OFDM signal. The scheduling information includes downlink physical resource block (PRB) allocation information (for example, physical resource block location information such as the frequency and time), the modulation scheme and coding scheme (for example, 16QAM modulation, 2/3 coding rate) corresponding to each downlink physical resource block (PRB), and the like.

Radio unit 103 generates a radio signal by up-converting the modulation data from OFDM modulation unit 102 to the radio frequency, and transmits the generated signal to mobile station device 200 via antenna unit A1. Radio unit 103 also receives an uplink radio signal from mobile station device 200 via antenna unit A1 to down-convert the received radio signal into a baseband signal, and outputs the obtained reception data to channel estimation unit 105 and DFT-S-OFDM demodulation unit 106.

Scheduling unit 104 carries out processing of a medium access control (MAC) layer. Scheduling unit 104 carries out mapping of a logical channel and transport channel, scheduling of a downlink and uplink (HARQ processing, transport format selection, and the like). Scheduling unit 104 includes an interface (not shown) of scheduling unit 104 with antenna unit A1, radio unit 103, channel estimation unit 105, DFT-S-OFDM demodulation unit 106, data control unit 101, OFDM modulation unit 102 and data extraction unit 107 to implement a converged control over the processing units of a physical layer.

In association with downlink scheduling, scheduling unit 104 carries out selection processing of the downlink transport format (transmission format) for modulating each data (allocation of a physical resource block (PRB) as well as a modulation scheme and coding scheme or the like), retransmission control processing of a HARQ, and generation processing of scheduling information used in downlink scheduling, based on feedback information received from mobile station device 200, information of a downlink physical resource block (PRB) available for each mobile station device 200, the buffer status, the scheduling information from upper layer 108, and the like. The feedback information received from mobile station device 200 includes a downlink channel feedback report (channel quality (CQI), number of streams (RI), precoding information (PMI) and the like), and/or ACK/NACK feedback information on the downlink data. Scheduling unit 104 outputs the scheduling information used in the downlink scheduling to data control unit 101 and data extraction unit 107.

In association with uplink scheduling, scheduling unit 104 carries out selection processing of an uplink transport format (transmission format) for modulating each data (allocation of a physical resource block (PRB) as well as a modulation scheme and coding scheme, or the like), and generation processing of scheduling information used in uplink scheduling, based on an estimated result of an uplink channel state (radio path state) output from channel estimation unit 105, a resource allocation request from mobile station device 200, information of a downlink physical resource block (PRB) available for each mobile station device 200, the scheduling information from upper layer 108, and the like. Scheduling unit 104 outputs the scheduling information used for such uplink scheduling to data control unit 101 and data extraction unit 107.

Scheduling unit 104 incorporates information for coding of a physical downlink control channel (PDCCH) to the downlink and uplink scheduling information, and notifies data control unit 101 about such information. At this stage, scheduling unit 104 incorporates the information of an appropriate radio network temporary identity (RNTI) into the downlink and uplink scheduling information, and notifies data control unit 101 about such information. Accordingly, data control unit 101 can scramble a cyclic redundancy check (CRC) of downlink control information (DCI) carried through a physical downlink control channel (PDCCH) with an appropriate RNTI.

Scheduling unit 104 maps the downlink logical channel from upper layer 108 to a transport channel, and outputs the mapped data to data control unit 101. Scheduling unit 104 maps the control data and transport channel obtained through the uplink from data extraction unit 107, subsequent to processing as necessary, to an uplink logical channel, and provides the mapped data to upper layer 108.

For demodulating uplink data, channel estimation unit 105 estimates an uplink channel state from an uplink demodulation reference signal (DRS), and provides the estimated result to DFT-S-OFDM demodulation unit 106. For uplink scheduling, channel estimation unit 105 estimates an uplink state from an uplink sounding reference signal (SRS), and provides the estimated result to scheduling unit 104.

Although a single carrier scheme such as DFT-S-OFDM is envisaged for an uplink communication scheme, a multicast scheme such as an OFDM scheme may be employed.

DFT-S-OFDM demodulation unit 106 carries out DFT-S-OFDM signal processing such as discrete fourier transform (DFT), subcarrier mapping, IFFT transform, filtering and the like on the modulation data from radio unit 103, based on the estimated result of an uplink channel state from channel estimation unit 105 to execute demodulation processing, and provides the demodulated data to data extraction unit 107.

Data extraction unit 107 determines whether the data from DFT-S-OFDM demodulation unit 106 is correct or not based on the scheduling information from scheduling unit 104, and provides the determination result (acknowledgement signal ACK/negative acknowledgement signal NACK) to scheduling unit 104.

Data extraction unit 107 extracts the transport channel and control data of the physical layer from the data output from DFT-S-OFDM demodulation unit 106 based on the scheduling information from scheduling unit 104, and provides the data to scheduling unit 104. The extracted control data includes feedback information (downlink channel feedback report (CQI, PMI, RI) and ACK/NACK feedback information on downlink data), and the like presented from mobile station device 200.

Upper layer 108 carries out processing of a packet data convergence protocol (PDCP) layer, a radio link control (RLC) layer, and a radio resource control (RRC) layer. Upper layer 108 includes an interface (not shown) of upper layer 108 with scheduling unit 104, antenna unit A1, radio unit 103, channel estimation unit 105, DFT-S-OFDM demodulation unit 106, data control unit 101, OFDM modulation unit 102 and data extraction unit 107 to implement a converged control over the processing units of a lower layer.

Upper layer 108 includes a radio resource control unit 109. Radio resource control unit 109 carries out administration of various setting information, administration of system information, administration of measurement setting and measurement result, paging control, administration of the communication state of each mobile station device 200, movement administration such as handover, administration of the buffer status for each mobile station device 200, administration of the connection setting of unicast and multicast bearers, administration of a mobile station identifier (UEID), and the like. Upper layer 108 transmits/receives information to/from another base station device and transmits/receives information to/from an upper node.

### <Configuration of Mobile Station Device>

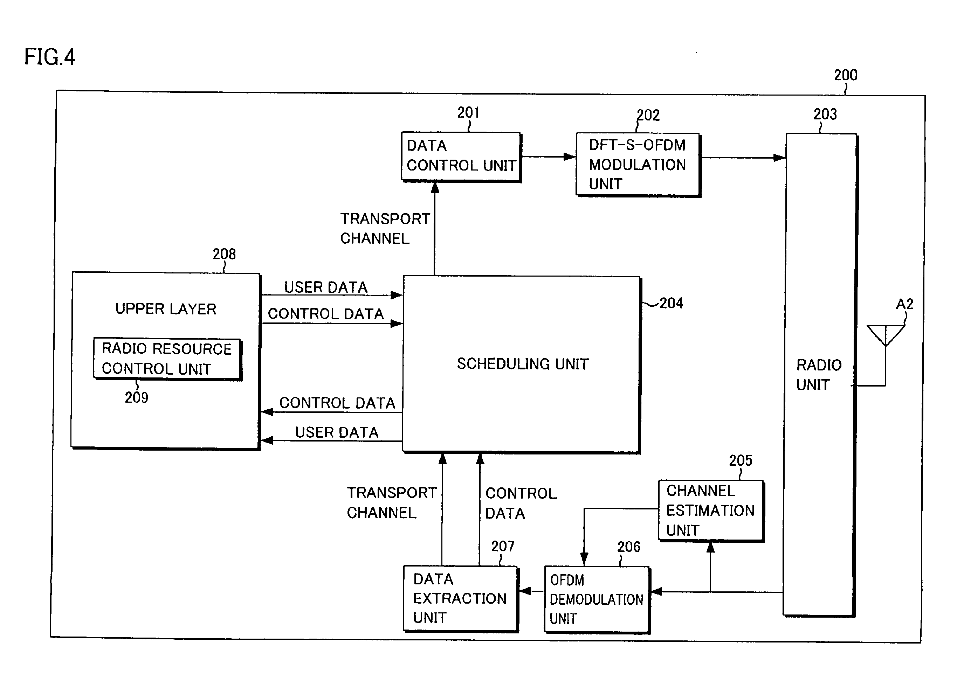

Fig. 4 is a schematic block diagram representing a configuration of mobile station device 200 according to the embodiment of the present invention. Mobile station device 200 includes a data control unit 201, a DFT-S-OFDM modulation unit 202, a radio unit 203, a scheduling unit 204, a channel estimation unit 205, an OFDM demodulation unit 206, a data extraction unit 207, an upper layer 208, and an antenna unit A2.

Data control unit 201, DFT-S-OFDM modulation unit 202, radio unit 203, scheduling unit 204, upper layer 208 and antenna unit A2 constitute a transmission unit. Radio unit 203, scheduling unit 204, channel estimation unit 205, OFDM demodulation unit 206, data extraction unit 207, upper layer 208 and antenna unit A2 constitute a reception unit. Scheduling unit 204 constitutes a selection unit.

Antenna unit A2, data control unit 201, DFT-S-OFDM modulation unit 202 and radio unit 203 carry out the processing of an uplink physical layer. Antenna unit A2, radio unit 203, channel estimation unit 205, OFDM demodulation unit 206 and data extraction unit 207 carry out processing of a downlink physical layer. The transmission unit and reception unit are capable of carrying out processing independently for each component carrier as well as common processing between a plurality of component carriers.

Data control unit 201 obtains a transport channel from scheduling unit 204. Data control unit 201 maps the transport channel and a signal and channel generated at the physical layer based on the scheduling information from scheduling unit 104 to the physical channel according to the scheduling information from scheduling unit 204. Each of such mapped data is output to DFT-S-OFDM modulation unit 202.

DFT-S-OFDM modulation unit 202 carries out DFT-S-OFDM signal processing such as data modulation, DFT processing, subcarrier mapping, inverse fast fourier transform (IFFT) processing, insertion of a cyclic prefix (CP) and filtering on the data from data control unit 201 to generate a DFT-S-OFDM signal for output to radio unit 203.

Although a single carrier scheme such as DFT-S-OFDM is envisaged for an uplink communication scheme, a multicast scheme such as an OFDM scheme may be employed.

Radio unit 103 generates a radio signal by up-converting the modulation data from DFT-S-OFDM modulation unit 202 to the radio frequency, and transmits the generated signal to base station device 100 via antenna unit A2. Radio unit 103 also receives via antenna unit A2 the radio signal from base station device 100, modulated by downlink data, to down-convert the received radio signal into a baseband signal, and outputs the obtained reception data to channel estimation unit 205 and OFDM demodulation unit 206.

Scheduling unit 204 carries out processing of a medium access control (MAC) layer. Scheduling unit 204 carries out mapping of a logical channel and transport channel, scheduling of a downlink and uplink (HARQ processing, transport format selection, and the like). Scheduling unit 104 includes an interface (not shown) of scheduling unit 104 with antenna unit A2, data control unit 201, DFT-S-OFDM modulation unit 202, channel estimation unit 205, OFDM demodulation unit 206, data extraction unit 207 and radio unit 203 to implement a converged control over the processing units of a physical layer.

In association with downlink scheduling, scheduling unit 204 carries out reception control processing of a transport channel, a physical signal, and a physical channel, HARQ retransmission control, and generation processing of scheduling information used in downlink scheduling, based on the scheduling information (transport format and/or HARQ retransmission information) from base station device 100 and upper layer 208. Scheduling unit 204 outputs such scheduling information used in downlink scheduling to data control unit 201 and data extraction unit 207.

In association with uplink scheduling, scheduling unit 204 carries out scheduling processing for mapping an uplink logical channel from upper layer 208 to a transport channel, and generation processing of scheduling information used in uplink scheduling, based on the uplink buffer status from upper layer 208, scheduling information of uplink from base station device 100 sent from data extraction unit 207 (transport format, HARQ retransmission information, and the like), scheduling information from upper layer 208, and the like. Scheduling unit 204 uses the notified information from base station device 100 as to the uplink transport format. Scheduling unit 204 outputs such scheduling information to data control unit 201 and data extraction unit 207.

In association with uplink scheduling, scheduling unit 204 carries out control of a scheduling request, contention based uplink control, as well as generation and control of a buffer status report (BSR).

Scheduling unit 204 maps the uplink logical channel from upper layer 208 to a transport channel, and provides the mapped data to data control unit 201. Scheduling unit 204 also outputs the downlink channel feedback report (CQI, PMI, RI) from channel estimation unit 205 and the CRC determination result from data extraction unit 207 to data control unit 201.

Scheduling unit 204 maps the control data and transport channel obtained through the downlink from data extraction unit 207, subsequent to processing as necessary, to the downlink logical channel, and outputs the mapped data to upper layer 208.

Scheduling unit 204 incorporates information directed to decoding of a physical downlink control channel (PDCCH) to the downlink and uplink scheduling information, and notifies data extraction unit 207 about such information. At this stage, scheduling unit 204 incorporates the information about the RNTI to be detected into the downlink and uplink scheduling information, and notifies data extraction unit 207 about such information. Accordingly, data extraction unit 207 can detect which radio network temporary identity (RNTI) is used to scramble the cyclic redundancy check (CRC) of the downlink control information (DCI) carried through the physical downlink control channel (PDCCH).

Scheduling unit 204 controls various timers. The timer continues to run (counts), once started, until it is stopped or until expiration. Apart from such a case, the timer does not count. The timer can be started, when not counting, or restarted, when counting. The timer always starts from the initial value.

For demodulating downlink data, channel estimation unit 205 estimates the downlink channel state from a downlink reference signal (RS), and outputs the estimated result to OFDM demodulation unit 206. To notify base station device 100 about the estimated result of the downlink channel state (radio path state), channel estimation unit 205 estimates the downlink channel state from the downlink reference signal (RS) to convert the estimated result to the downlink channel feedback report (channel quality information and the like) for output to scheduling unit 204. To notify base station device 100 about the downlink measured result, channel estimation unit 205 outputs the measured result of the downlink reference signal (RS) to radio resource control unit 209.

OFDM demodulation unit 206 executes OFDM demodulation processing on the modulation data from radio unit 203, based on the downlink channel state estimation result from channel estimation unit 205, and provides the demodulated data to data extraction unit 207.

Data extraction unit 207 carries out a cyclic redundancy check (CRC) on the data from OFDM demodulation unit 206 to determine whether the data is correct or not, and outputs the determination result (ACK/NACK feedback information) to scheduling unit 204.

Data extraction unit 207 extracts the physical layer and control data of the transport channel from the data output from OFDM demodulation unit 206, based on the scheduling information from scheduling unit 204, for output to scheduling unit 204. The extracted control data includes scheduling information such as the downlink or uplink resource allocation and uplink HARQ control information. At this stage, the searching space (also referred to as searching region) of a physical downlink control channel (PDCCH) is subject to decode processing for extracting the resource allocation of a downlink or uplink addressed to itself.

Upper layer 208 carries out processing of a packet data convergence protocol (PDCP) layer, and a radio link control (RLC) layer, and a radio resource control (RRC) layer. Upper layer 208 includes an interface (not shown) of upper layer 208 with scheduling unit 204, antenna unit A2, data control unit 201, DFT-S-OFDM modulation unit 202, channel estimation unit 205, OFDM demodulation unit 206, data extraction unit 207 and radio unit 203 to implement a converged control over the processing units of the lower layer for control.

Upper layer 208 includes radio resource control unit 209. Radio resource control unit 209 carries out administration of various setting information, administration of system information, administration of measurement setting and measurement result, paging control, administration of the communication state of its own station, movement administration such as handover, administration of the buffer status of its own station, administration of the connection setting of unicast and multicast bearers, administration of a mobile station identifier (UEID), and the like.

### <Network Configuration>

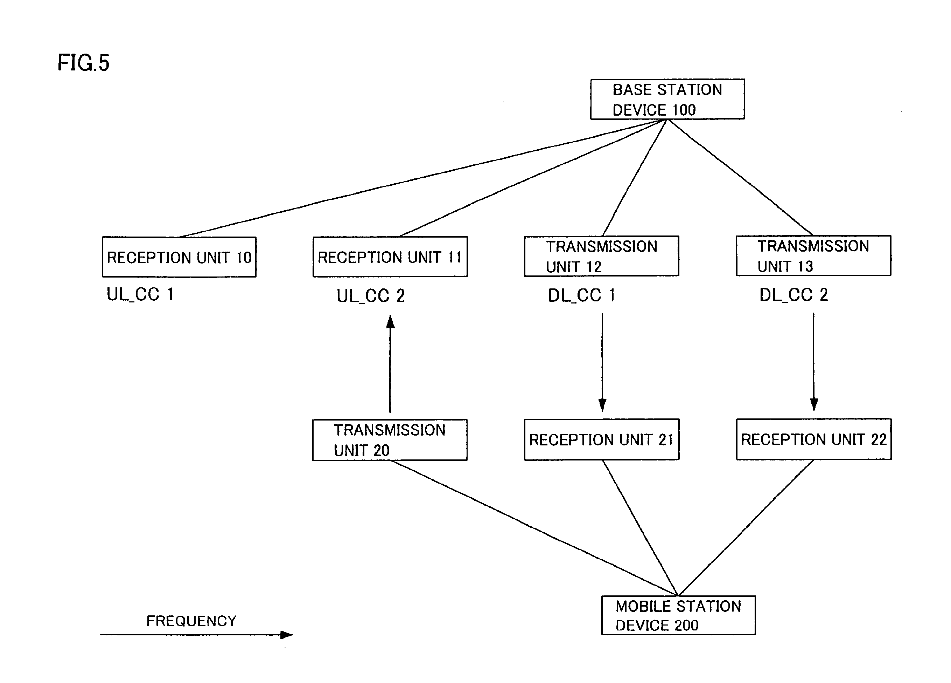

Fig. 5 represents an example of a network configuration according to the present embodiment. Specifically, there is represented an exemplary configuration allowing simultaneous transmission by a plurality of frequency layers (downlink component carriers DL_CC1 to DL_CC2, and uplink component carriers UL_CC1 to UL_CC2) through carrier aggregation. In this case, base station device 100 includes a transmission unit 12 and a transmission unit 13 for a plurality of downlink frequency layers (DL_CC1 to DL_CC2). Furthermore, base station device 100 includes a reception unit 10 and a reception unit 11 for a plurality of uplink frequency layers (UL_CC1 to UL_CC2). It is to be noted that DL_CC1 or UL_CC1 may be provided from another base station device. Transmission unit 12 and transmission unit 13 may be formed as an integrated transmitter. Furthermore, reception unit 10 and reception unit 11 may be formed as an integrated receiver.

Mobile station device 200 includes a reception unit 21 and a reception unit 22 for a plurality of downlink frequency layers (DL_CC1 to DL_CC2). Reception unit 21 and reception unit 22 may be formed as an integrated receiver. Mobile station device 200 includes a transmission unit 20 corresponding to at least one of the plurality of uplink frequency layers. Although the example of Fig. 5 represents mobile station device 200 having one transmission unit 20, mobile station device 200 may include a plurality of transmission units when supporting uplink carrier aggregation. Thus, the number of component carriers presented by base station device 100 and the number of component carriers used by mobile station device 200 may differ from each other.

In the network according to the present embodiment, a component carrier setting specific to a mobile station device 200 is allowed since the setting of a component carrier (carrier aggregation) is applied to mobile station device 200 by a dedicated signal (RRC signaling or the like). Fig. 5 represents an example in which base station device 100 is set to use DL_CC1, DL_CC2, UL_CC1 and UL_CC2 whereas mobile station device 200 is set to use DL_CC1, DL_CC2 and UL_CC2.

Mobile station device 200 can recognize each component carrier as a cell without being conscious of which base station device is transmitting the downlink component carrier and/or which base station device receives the uplink component carrier. Mobile station device 200 obtains system information such as the frequency band and bandwidth related to the corresponding downlink or uplink component carrier from the system information broadcasted at each cell and /or a dedicated signal (RRC signaling or the like) notified to each mobile station device.

### <Control Information>

A plurality of formats are prepared for the downlink control information DCI carried through a physical downlink control channel (PDCCH). The format of downlink control information DCI is also referred to as DCI (Downlink Control Information) format. There are a plurality of types of DCI format, classified by the application, number of bits, and the like. DCI formats with the same number of bits and different number of bits are present. Mobile station device 200 carries out reception processing of a physical downlink shared channel (PDSCH) according to the received DCI format. Mobile station device 200 can identify at least one of the PDCCH and/or PDSCH application (transport channel or logical channel), the DCI format, and the PDSCH transmission scheme depending upon which identifier (RNTI) is used for scrambling the DCI cyclic redundancy check (CRC). A radio network temporary identity (RNTI) is implicitly encoded with the CRC of the DCI included in the physical downlink control channel (PDCCH). More specifically, the CRC is scrambled with RNTI by calculating the logical sum of the 16-bit CRC parity bit and 16-bit RNTI.

A plurality of types are defined for a RNTI. P-RNTI (Paging-RNTI) is used in the scheduling of the update information of paging information and system information. SI-RNTI (system information-RNTI) is used in the scheduling of system information. RA-RNTI (random access-RNTI) is used in the scheduling of random access response. Temporary C-RNTI is used in downlink scheduling and uplink scheduling during random access. C-RNTI is used in dynamic scheduling of unicast downlink and uplink transmission. SPS C-RNTI (Semi-persistent scheduling C-RNTI) is used in the quasi-static scheduling of unicast downlink and uplink transmission. TPC-PUCCH-RNTI (Transmit Power Control-Physical Uplink Control Channel-RNTI) or TPC-PUSCH-RNTI (Transmit Power Control-Physical Uplink Shared Channel-RNTI) is used in uplink power control of a physical layer.

### <Contention Based Uplink>

The mobile communication system according to the embodiment of the present invention can accommodate a mixture of terminals corresponding to different releases such as a LTE (release 8 and release 9) terminal and LTE-A (release 10) terminal. A LTE-A terminal operates as the LTE (release 8) (or LTE mode) upon initiating communication and until an operation defined by a certain release is specified from base station device 100.

In LTE-A, research on introducing a new access scheme for reducing latency is now pursued. Contention based uplink (CB-Uplink) is one method thereof. The contention based uplink that is similar to random access utilizing a physical random access channel (PRACH) in terms of potential contention (collision) differs in the following aspects. There is difference between random access and contention based uplink in that the resource of random access is a physical random access channel (PRACH) indicated in the broadcasted system information whereas the resource of the contention based uplink is a physical uplink shared channel (PUSCH) scheduled at the physical downlink control channel (PDCCH). Furthermore, for message 3 (Msg3) in random access processing, a physical uplink shared channel (PUSCH) is used. More specifically, mobile station device 200 transmits a preamble using a physical random access channel (PRACH), and then transmits uplink data using a physical uplink shared channel (PUSCH) with still the possibility of collision. In a contention based uplink, the base station device schedules the physical uplink shared channel (PUSCH) that has the possibility of collision using a physical downlink control channel (PDCCH) without the transmission of a preamble using a physical random access channel (PRACH). Mobile station device 200 transmits uplink data using the scheduled physical uplink shared channel (PUSCH). In other words, the random access procedure or random access preamble transmission is not required for the contention based uplink.

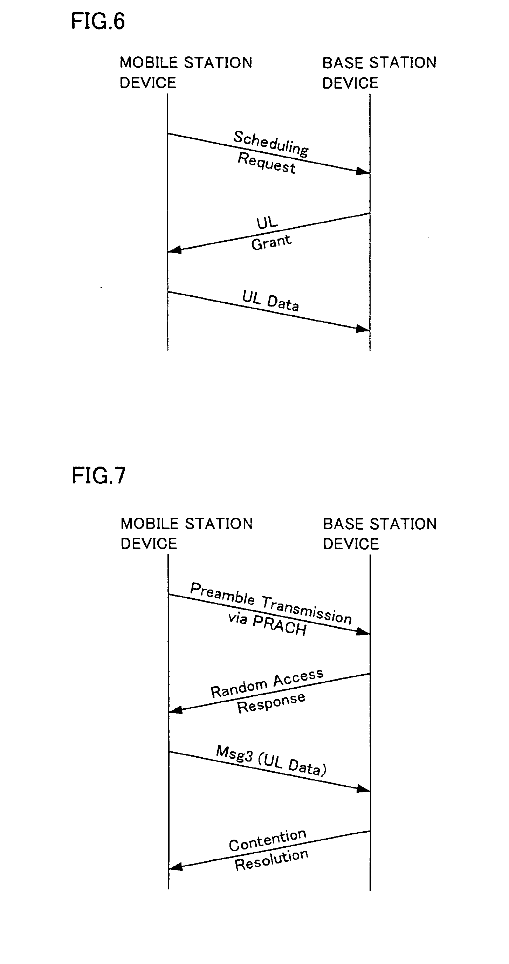

The LTE is based on access utilizing a scheduling request. Specifically, mobile station device 200 uses a physical uplink control channel (PUCCH) or a physical random access channel (PRACH) to request base station device 100 of a resource for transmitting uplink data. Fig. 6 represents an example of the procedure of a scheduling request (SR) using a physical uplink control channel (PUCCH). Fig. 7 represents an example of the procedure of a scheduling request using a physical random access channel (PRACH).

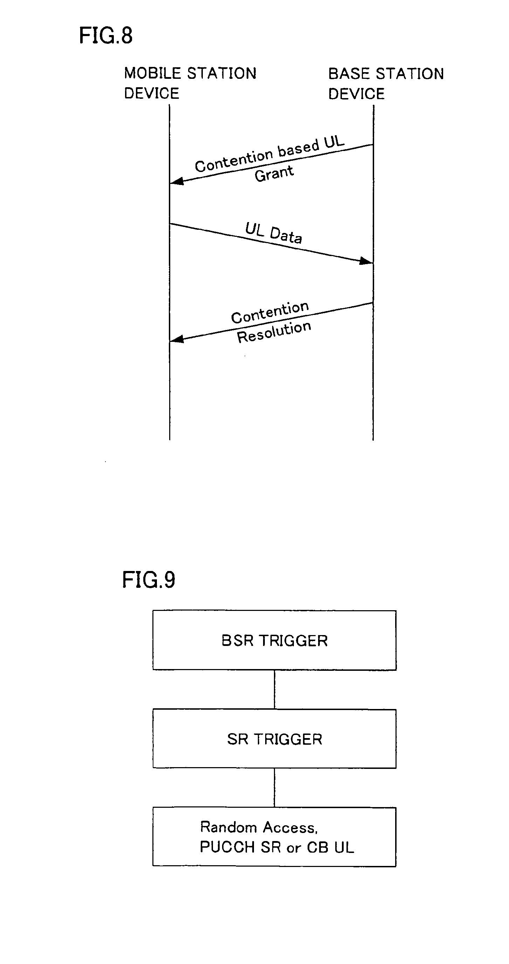

It is to be noted that the contention based uplink differs from the access method of requiring a scheduling request since mobile station device 200 can directly transmit uplink data without having to perform scheduling request processing. A physical uplink shared channel (PUSCH) is absent of a guard time, differing from a physical random access channel (PRACH), so that only mobile station device 200 that has a valid uplink timing alignment can gain access by the contention based uplink. The valid period of the uplink timing alignment starts from reception of uplink timing information (timing advance command) until an elapse of a predetermined period (also including infinity). Fig. 8 represents an example of the procedure of a contention based uplink.

In the case where a resource for a contention based uplink is to be scheduled, a CB-RNTI is used at a physical downlink control channel (PDCCH). Mobile station device 200 recognizes that a normal physical uplink shared channel (PUSCH) is allocated when C-RNTI is detected through the PDCCH decode processing, and that a physical uplink shared channel (PUSCH) for a contention based uplink is allocated when a CB-RNTI is detected. Such a notification of a resource allocation of a physical uplink shared channel (PUSCH) using a CB-RNTI and the like is also referred to as "a grant for a contention based uplink".

In contrast, a grant other than the aforementioned grant (usage permission) for a contention based uplink is called "normal grant". A normal grant implies a grant transmitted through PDCCH including C-RNTI or SPS C-RNTI.

### <Canceling Condition of Scheduling Request>

A processing method of a scheduling request (SR) will be described hereinafter. In an LTE mode, a contention based uplink (CB-Uplink) is not used. An SR is used to request an UL-SCH (uplink data) resource to newly transmit data. When an SR is triggered (induced), it is assumed to be pending (undetermined state) until the SR is canceled.

Transmission of an SR is prohibited during a predetermined time from the transmission of an SR. To this end, an sr-ProhibitTimer (a timer for prohibiting transmission of a scheduling request) is used to count a predetermined time from the start until expiration.

When a MAC protocol data unit (MAC PDU) is assembled and this PDU contains a buffer status report (BSR) including a buffer state up to the last event that has triggered the BSR, or when the uplink grant can accommodate all pending data used for transmission, all pending SRs are canceled, and the sr-ProhibitTimer is stopped.

### <Canceling Condition of Scheduling Request and Priority Between Random Access and Scheduling Request>

In the case where an SR triggered and there is no other pending SR, the MAC layer in mobile station device 200 has SR_COUNTER set to "0". SR_COUNTER is a counter to count how many times an SR has been transmitted.

At each TTI, mobile station device 200 carries out an operation set forth below as long as an SR is pending.

In the case where there is no resource of an UL-SCH that can be used for transmission during this TTI and mobile station device 200 does not have a valid PUCCH resource for the set SR in any TTI, the MAC layer in mobile station device 200 initiates a random access procedure and cancels all pending SRs.

In the case where there is no resource of an UL-SCH that can be used for transmission during this TTI, mobile station device 200 has a valid PUCCH resource for the set SR in this TTI, sr-ProhibitTimer is not running (not counting), and SR_COUNTER is lower than a predetermined transmission maximum value, the MAC layer in mobile station device 200 increments SR_COUNTER by "1", instructs a physical layer to signal an SR through PUCCH, and starts sr-ProhibitTimer. The physical layer in mobile station device 200 responds to transmit an SR through PUCCH. In the case where there is no resource of an UL-SCH that can be used for transmission during this TTI, mobile station device 200 has a valid PUCCH resource for the set SR in this TTI, sr-ProhibitTimer is not counting, and SR_COUNTER is greater than or equal to a predetermined transmission maximum value, the MAC layer in mobile station device 200 notifies the RRC layer of releasing PUCCH. The RRC layer releases PUCCH accordingly. The MAC layer in mobile station device 200 initiates the random access procedure, and cancels all pending SRs.

### <Triggering Condition of Scheduling Request>

A method of triggering a scheduling request (SR) will be described hereinafter.

In the case where a determination is made that at least one buffer status report (BSR) is triggered and has not been canceled in the buffer status reporting procedure, mobile station device 200 does not have an UL resource allocated for new transmission in this TTI, and a regular BSR (described afterwards) is already triggered, an SR is triggered.

In the case where a determination is made that at least one BSR is triggered and has not been canceled in the buffer status reporting procedure, and mobile station device 200 has an UL resource allocated for new transmission in this TTI, a BSR MAC CE (control element), another MAC CE, and/or MAC SDU (Service Data Unit) are multiplexed to a MAC PDU. The MAC PDUs are assembled to be transmitted.

### <Type of Buffer Status Report and Triggering Condition>

A BSR includes a regular BSR, a padding BSR, and a periodic BSR.

When uplink data belonging to a certain logical channel becomes available for transmission through an upper layer (RLC or PDCP), when that uplink data is given higher priority than another logical channel, or when there is no logical channel with data used for transmission, a regular BSR is triggered. A regular BSR is triggered also in the case where the retxBSR-Timer has expired and has some data available for logical channel transmission. retxBSR-Timer is a timer used to detect that a BSR has not been transmitted for a predetermined period. An SR is triggered due to the triggering of a regular BSR.

In the case where the uplink resource has a padding region required for transmitting a BSR, a padding BSR is triggered.

A periodic BSR is triggered at a predetermined period.

### <Canceling Condition of Buffer Status Report>

In the case where an uplink grant is sufficient to accommodate all pending data available for transmission, but not sufficient to accommodate a BSR and a subheader thereof, any triggered BSR is canceled. In the case where a BSR is included in a MAC PDU for transmission, any triggered BSR is canceled.

### <Introduction of Contention Based Uplink>

When a contention based uplink is used, it is necessary to determine the trigger condition of a further SR, and which processing of random access, or the SR in the PUCCH or contention based uplink is to be given priority. By determining an appropriate trigger condition and priority method, a BSR can be transmitted reliably from mobile station device 200 to base station device 100 and uplink scheduling at base station device 100 can be carried out efficiently.

Specifically, base station device 100 sets whether mobile station device 200 uses a contention based uplink or not. For example, the CB-RNTI and/or presence/absence of a usage grant of the contention based uplink is notified by the broadcasted system information, presented to mobile station device 200 by base station device 100. Mobile station device 200 uses a contention based uplink when a CB-RNTI or presence/absence of a usage grant of the contention based uplink is detected.

As another method, base station device 100 notifies mobile station device 200 about a CB-RNTI and/or presence/absence of a usage grant of the contention based uplink by RRC signaling that is a dedicated signal. Mobile station device 200 uses a contention based uplink when a CB-RNTI and/or presence/absence of a usage grant of the contention based uplink is detected.

In the case where the CB-RNTI is determined in advance in a specification, the CB-RNTI does not have to be notified. Only the presence/absence of a usage grant of the contention based uplink is to be notified. Accordingly, the overhead caused by notifying the CB-RNTI can be reduced.

If the CB-RNTI is broadcasted in advance or determined in a specification, the presence/absence of a usage grant of the contention based uplink may be notified through RRC signaling that is a dedicated signal by base station device 100 towards mobile station device 200. Mobile station device 200 obtains the CB-RNTI from the system information broadcasted in advance, or retains the CB-RNTI as fixedly predetermined in a specification, and obtains the presence/absence of a usage grant of the contention based uplink through a dedicated signal.

Therefore, the CB-RNTI does not have to be notified through the dedicated signal. Only the presence/absence of a usage grant of the contention based uplink is to be notified. Thus, the overhead caused by notifying a CB-RNTI can be reduced.

In the case where carrier aggregation is applied to mobile station device 200, base station device 100 notifies mobile station device 200 about the CB-RNTI of each component carrier and/or presence/absence of a usage grant of the contention based uplink through the broadcasting system information or RRC signaling of a dedicated signal by base station device 100 towards mobile station device 200. Accordingly, the presence/absence of a usage grant of the contention based uplink can be controlled for every component carrier.

### < Priority Between Grant for Contention Based Uplink and Normal Grant>

When a grant for a contention based uplink and indication of initial transmission or adaptive retransmission according to a normal grant are detected, the normal grant is given priority.

When a grant for a contention based uplink and indication of non-adaptive retransmission according to the NACK of PHICH are detected in the same subframe, priority is given to the non-adaptive retransmission by the NACK of PHICH at base station device 100.

If a contention based uplink is always used for a subframe in which a grant for a regular uplink by C-RNTI was not detected among the subframes from which a grant for a contention based uplink was detected, many mobile station devices will come to use the contention based uplink, leading to a higher collision probability. Therefore, a mobile station device set to use a contention based uplink comes to use a contention based uplink on the condition that an SR is pending. Mobile station device 200 may be made to monitor a grant for a contention based uplink (or CB-RNTI) only when an SR is pending. Alternatively, the resource of the contention based uplink may be used only when an SR is pending even if a grant for a contention based uplink (or CB-RNTI) is detected. By adopting such processing, mobile station device 200 can be made to not use a contention based uplink when base station device 100 has already started scheduling with a normal grant, allowing the collision probability at the contention based uplink to be reduced.

Mobile station device 200 may retain individual HARQ buffers between a contention based uplink and a regular uplink. In other words, a buffer for a contention based uplink (CB-Buffer) may provide provided additionally at mobile station device 200. When a normal grant is received and that grant has been transmitted initially, mobile station device 200 stores the MAC PDU in the HARQ buffer. When a grant for a contention based uplink is received and that grant has been transmitted initially, mobile station device 200 stores the MAC PDU in the CB buffer.

By adopting such processing, independent buffer administration can be performed between a contention based uplink and a regular uplink, allowing independent control for each buffer. Therefore, even if usage of a contention based uplink occurs during retransmission processing according to a HARQ at a regular uplink, the HARQ retransmission processing can be resumed since the data of the HARQ buffer is maintained.

Mobile station device 200 may have a HARQ buffer for a certain HARQ process shared between a contention based uplink and a regular uplink. By adopting such processing, the capacity of the HARQ buffer can be reduced. In the case where the previous grant for uplink with respect to the same HARQ process is a grant for a contention based uplink and the current uplink grant is a grant for a C-RNTI (normal grant), mobile station device 200 recognizes that a new data indicator (NDI) is toggled irrespective of the value of the NDI. In the case where mobile station device 200 determines that an NDI is toggled, a new MAC PDU is stored in the HARQ buffer corresponding to the HARQ process of interest, and transmission of new data is prepared. An NDI takes one bit of information, and is included in the grant for an uplink. By comparing with the value of the NDI in the previous transmission, a determination can be made as to whether toggled or not.

### <Canceling Condition of Scheduling Request in Contention Based Uplink>

The general SR canceling condition is "MAC PDU (MAC protocol data unit) is assembled, and this PDU contains a buffer status report including a buffer state up to the last event that has triggered the BSR " or " the uplink grant can accommodate all pending data used for transmission".

However, when the uplink grant is a grant for a contention based uplink (contention based uplink is to be carried out), all the pending SRs will be maintained without being canceled and sr-ProhibitTimer will continue counting without being stopped, even if the uplink grant can accommodate all the pending data used for transmission. It is to be noted that a grant for a contention based uplink and a normal grant are valid only when the time alignment timer is running. A time alignment timer is started or restarted upon receiving uplink timing information (timing advance command), and counts a predetermined period (including infinity) until expiration.

By adopting such processing, mobile station device 200 can carry out contention base processing and scheduling request processing in parallel. Furthermore, even if collision occurs at the contention based uplink, back up by the scheduling request is allowed. Delay in latency caused by collision at the contention based uplink can be avoided.

When the uplink grant is a grant for a contention based uplink (when contention based uplink is used, or when the MAC PDU is directed to a contention based uplink), a MAC protocol data unit (MAC PDU) is assembled, and all pending SRs are maintained without being canceled and sr-ProhibitTimer continues to count without being stopped even if that PDU contains a BSR including a buffer state up to the last event that has triggered the BSR.

### <Canceling Condition of Scheduling Request at Contention Based Uplink, and Priority Between Contention Based Uplink, Random Access and Scheduling Request>

A simplified diagram of scheduling request processing is shown in Fig. 9. In response to a predetermined condition being met, a buffer status report (BSR) is triggered. In response to the triggering of a BSR, a scheduling request (SR) is triggered. When an SR is triggered, at least one of random access processing, PUCCH scheduling request processing, and contention based uplink processing is carried out.

If an SR is triggered and there is no other pending SR, the MAC layer of mobile station device 200 sets SR_COUNTER at "0". Mobile station device 200 carries out an operation set forth below at each TTI as long as an SR is pending.

When there is a resource of a contention based uplink that can be used for transmission at this TTI, the MAC layer of mobile station device 200 initiates a convention based uplink procedure. The SR is not canceled.

To avoid any SR not required at this stage, all pending SRs may be canceled when the contention resolution succeeds in the contention based uplink procedure. In other words, when base station device 100 was able to decode the data without contention at the contention based uplink, the SR will be canceled. Canceling of the SR may be disable when the contention resolution does not succeed.

The MAC layer of mobile station device 200 may be prohibited to use the contention based uplink when sr-ProhibitTimer is running.

By adopting such processing, a contention based uplink not required will not be transmitted when an SR is already transmitted, allowing the collision probability to be reduced.

Furthermore, the MAC layer of mobile station device 200 may be prohibited to initiate a contention based uplink procedure during the period starting from transmission of a contention based uplink until completion of the contention resolution processing.

By adopting such processing, the event of a plurality of contention based uplink processing being performed in parallel can be avoided, allowing the processing to be simplified.

In the case where there is no resource of an UL-SCH that can be used for transmission in this TTI and mobile station device 200 does not have a PUCCH resource valid for the set SR in any TTI, the MAC layer in mobile station device 200 initiates a random access procedure, and all pending SRs are canceled.

The MAC layer of mobile station device 200 may be prohibited to initiate the random access procedure during a period starting from transmission of a contention based uplink until completion of the contention resolution processing. By adopting such processing, the frequency of a random access procedure having the highest latency and probability of collision can be reduced.

In the case where there is no resource of an UL-SCH that can be used for transmission during this TTI, mobile station device 200 has a valid PUCCH resource for the set SR in this TTI, sr-ProhibitTimer is not counting, and SR_COUNTER is lower than a predetermined transmission maximum value, the MAC layer in mobile station device 200 increments SR_COUNTER by "1", instructs a physical layer to signal an SR through PUCCH, and starts sr-ProhibitTimer. The physical layer in mobile station device 200 responds to transmit an SR through PUCCH. In the case where there is no resource of an UL-SCH that can be used for transmission during this TTI, mobile station device 200 has a valid PUCCH resource for the set SR in this TTI, sr-ProhibitTimer is not counting, and SR_COUNTER is greater than or equal to a predetermined transmission maximum value, the MAC layer in mobile station device 200 notifies the RRC layer of releasing PUCCH. The RRC layer releases PUCCH accordingly. Furthermore, the MAC layer in mobile station device 200 initiates the random access procedure, and cancels all pending SRs

Furthermore, the MAC layer of mobile station device 200 may be prohibited to initiate an SR procedure by PUCCH during the period starting from transmission of data through a contention based uplink and until the contention resolution processing is completed.

By adopting such processing, an SR procedure not required can be reduced.

However, in order to enhance the back up towards collision of a contention based uplink, the SR procedure may be initiated even before completion of the contention resolution processing.

In the case where a contention based uplink and a PUCCH scheduling request can be transmitted at the same time, the MAC layer of mobile station device 200 may transmit a contention based uplink and a PUCCH scheduling request together. In this case, the condition of "when there is no resource of an UL-SCH that can be used for transmission in this TTI" becomes "when there is no resource of an UL-SCH other than a contention based uplink that can be used for transmission in this TTI". By adopting such processing, a contention based uplink processing and PUCCH scheduling request processing can be carried out in parallel even at the same TTI.

In other words, a normal grant is given more priority than a grant for a contention based uplink, and a grant for a contention based uplink is given more priority than the random access and PUCCH scheduling request. Thus, by giving priority to an access method having lower latency, the latency can be reduced as much as possible.

Furthermore, the MAC layer of mobile station device 200 may be prohibited to initiate the scheduling request processing (random access processing, PUCCH scheduling request processing, and/or contention based uplink processing) even if an SR is pending during the period starting from transmission of a contention based uplink until completion of contention resolution processing. By adopting such processing, the event of contention based uplink processing and another scheduling request processing being performed in parallel can be avoided, allowing the processing to be simplified.

In the case where there is both a resource for a contention based uplink and a resource for a PUCCH scheduling request at the same TTI, the PUCCH scheduling request may be given priority. Although the contention based uplink has a lower latency than PUCCH scheduling request, the possibility of collision thereof is high. Therefore, by giving priority to a PUCCH scheduling request, reliability can be given weight. Random access is used when there is no valid PUCCH resource for the set SR in any TTI. However, even if there is a valid PUCCH resource for the set SR at any TTI, mobile station device 200 may be allowed to use a contention based uplink in the case where the resource of a contention based uplink is allocated and the resource of a PUCCH scheduling request is not allocated at this TTI. By adopting such processing, the contention based uplink processing and PUCCH scheduling request processing can be carried out in parallel at an interval except for the same TTI.

### <Case with No Buffer Status Report>

A method of avoiding double transmission of a BSR by not transmitting a buffer status report (BSR) through a contention based uplink will be described hereinafter.

When the uplink grant is a grant for a contention base (when contention based uplink processing is to be carried out), the BSR may be prohibited to be multiplexed to MAC PDU at mobile station device 200 during MAC PDU assembling. Accordingly, no problem will occur in association with the condition that "MAC protocol data unit (MAC PDU) is assembled, and the SR is canceled when the PDU contains a BSR including a buffer state up to the last event that has triggered the BSR " since the SR is not canceled at the contention based uplink.

By adopting such processing, mobile station device 200 can carry out contention base processing and scheduling request processing in parallel. Furthermore, even if collision occurs at the contention based uplink, back up by a scheduling request is allowed so that delay in latency caused by collision at the contention base can be avoided.

Furthermore, by setting a restriction to carry out contention based uplink processing only when all the pending data available for transmission can be accommodated, the processing can be further simplified. In other words, mobile station device200 carries out contention based uplink processing only when a transport block size indicated by the grant for a contention based uplink is larger than the size of all pending data available for transmission.

### <Case With Only Buffer Status Report>

Next, a method of avoiding delay of uplink data by transmitting a BSR and another MAC CE (C-RNTI MAC CE or the like) through a contention based uplink will be described hereinafter.

When the uplink grant is a grant for a contention base (when contention based uplink processing is to be carried out), the uplink data (MAC SDU) may be prohibited to be multiplexed to the MAC PDU during MAC PDU assembling at mobile station device 200. Accordingly, even if collision occurs at the contention based uplink, failure in the transmission of uplink data that was obtained from the RLC layer will not occur. As a result, the MAC layer can collaborate efficiently with the RLC layer, allowing delay in latency caused by collision at the contention based uplink to be avoided.

### <Backup of Buffer Status Report>

The method of avoiding a state in which a BSR does not arrive at base station device 100 when mobile station device 200 transmits the BSR through a contention based uplink will be described hereinafter.

In the case where the uplink grant is not a grant for a contention based uplink, and the relevant uplink grant can accommodate all pending data available for transmission, but not sufficient to accommodate the BSR and subheader thereof, all the triggered BSRs may be canceled. Furthermore, when a BSR is included in the MAC PDU for transmission excluding contention based uplink, all the triggered BSR may be canceled. Thus, by prohibiting a BSR to be canceled depending upon a contention based uplink, the triggered state of the BSR can be maintained even after contention based uplink processing is carried out.

In other words, the BSR will be included again in the subsequent uplink transmission and/or contention based uplink transmission. An event of BSR uplink data not reaching base station device 100 can be avoided by duplex transmission of the BSR.

### <Restriction in Number of Times of Retransmitting Contention Base>

The maximum number of times of retransmission of a hybrid automatic repeat request (HARQ) in applying the HARQ to a contention based uplink will be described hereinafter. The HARQ maximum number of times of retransmission can be controlled to differ between a contention based uplink and a regular uplink. In the case of a contention based uplink, the effect of reducing latency can be improved by restricting the HARQ maximum number of times of retransmission lower than that of a regular uplink. Furthermore, HARQ may be prohibited to be applied to the contention based uplink (equivalent to setting the maximum number of times of retransmission to "0").

Base station device 100 notifies and sets for mobile station device 200 the HARQ maximum number of times of retransmission for a regular uplink through the broadcasting system information and/or RRC signaling of a dedicated signal. Further, base station device 100 notifies mobile station device 200 about the HARQ maximum number of times of retransmission for a contention based uplink through the broadcasting system information and/or RRC signaling of a dedicated signal. Mobile station device 200 carries out flush processing of the HARQ buffer when the number of times of retransmission reaches the maximum number of times of retransmission, based on the maximum number of times of HARQ retransmission for a regular uplink and for a contention based uplink. In the case where a buffer for a contention based uplink (CB Buffer) is additionally provided, the maximum number of times of retransmission for CB-Buffer is set.

### <Method of Realizing Contention Resolution of Contention Base>

Contention resolution for a contention based uplink is the processing executed for base station device 100 to notify mobile station device 200 about whether collision by a plurality of mobile station devices 200 has occurred or not. By this contention resolution processing, mobile station device 200 can retry a contention based uplink and/or scheduling request processing at an early point.

Several methods of realizing contention resolution for a contention based uplink are possible. As one example, mobile station device 200 has a period starting from transmission of a contention based uplink and until contention resolution processing is completed counted by a timer. If contention resolution did not succeed during the running of the timer, mobile station device 200 determines that contention resolution has failed.

A method of base station device 100 notifying mobile station device 200 of success in contention resolution will be described hereinafter.

A first method utilizes the ACK/NACK of a HARQ by a PHICH for a contention based uplink to notify mobile station device 200 of success in contention resolution. Mobile station device 200 determines that contention resolution has succeeded when receiving ACK and that contention resolution has failed or indication of HARQ retransmission has been received when receiving NACK.

As a second method, mobile station device 200 determines that contention resolution has succeeded when a detection is made of any of a PDDCH including C-RNTI, downlink resource allocation including C-RNTI, and uplink grant including C-RNTI.

As a third method, mobile station device 200 determines that contention resolution has succeeded when a MAC CE indicating success of contention resolution is detected at the downlink (DL-SCH).

The MAC CE indicating success of contention resolution may be scheduled through a CB-RNTI or through a C-RNTI. When scheduled through PDCCH including a CB-RNTI, the MAC CE may be transmitted containing C-RNTI of mobile station device 200 that has won the competition and a plurality of contention resolutions may be included in one DL-SCH. When scheduling through a PDCCH including C-RNTI, both the MAC CE and downlink data (MAC SDU) can be transmitted to mobile station device 200 at the same time. Furthermore, by transmitting the ACK of RLC through the downlink data transmitted together with this MAC CE, the success in reception at base station device 100 can be notified to both MAC and RLC, allowing the efficiency to be further improved.

When RLC retransmission control is valid, the contention resolution for a contention based uplink may be prohibited.

### <Modification>

In each of the embodiments set forth above, a component carrier may also be interpreted simply as a cell.

Although each of the embodiments set forth above is described in which a plurality of component carriers constitute one system, the plurality of systems may be aggregated and construed as constituting one system. Furthermore, a component carrier may be construed as a region where the system operates by a specific receiver or specific transmitter tuning in the carrier frequency to the center of each component carrier.

Each of the embodiments set forth above may be combined appropriately to be implemented.

In each of the embodiments, base station device 100 and mobile station device 200 may be provided in plural. A mobile station device 200 is not limited to a mobile terminal, and may be realized by a base station device or stationary terminal mounted with the function of a mobile station device.

In each of the embodiments set forth above, a program operated at a mobile station device and/or base station device involved in the present invention includes a program controlling a CPU or the like (a program for computer function) to realize the features described in the embodiments set forth above.

The information handled at a mobile station device and/or base station device is temporarily stored in a RAM during processing. Then, the information is stored in various ROMs (Read Only Memory) or hard disc drives (HDD) to be subject to processing such as read out, correcting, and writing by a CPU or the like, as necessary.

A record medium for storing the program may be any of a semiconductor medium (for example, ROM, non-volatile memory card or the like), an optical recording medium (for example, digital versatile disc (DVD), magneto-optical disc (MO), mini disc (MD), compact disc (CD), blu-ray disc (BD) or the like), a magnetic recording medium (for example, magnetic tape, flexible disc), or the like. In addition to realizing the functions of the embodiment set forth above by executing a loaded program, the functions of respective embodiment set forth above may be realized through processing together with an operating system or another application program, based on the commands in that program.

In the case where the aforementioned program is to be distributed on the market, the program may be stored in a portable recording medium, or transferred to a server computer connected through a network such as the Internet. In this case, the storage device of the server computer is involved in the present invention. Furthermore, a part or all of the mobile station device and base station device according to the embodiments set forth above may be realized as an LSI (large scale integration) that is an integrated circuit. Specifically, each functional block of the mobile station device and/or base station device may be provided individually in chips, or these functions may be integrated partially or entirely in a chip. The means for an integrated circuit is not limited to an LSI, and may be realized by an application specific integrated circuit (ASIC), a chip set substrate, a dedicated circuit, or a general-purpose processor. When development in the semiconductor art sees the approach of achieving an integrated circuit replacing an LSI, an integrated circuit by such approach may be employed.

Although the embodiments of the present invention has been described in detail with reference to the drawings, it is to be understood that the specific configuration is not limited by embodiments disclosed, and is intended to include any design or the like within the scope and meaning equivalent to the terms of the claims in the present invention.

### REFERENCE SIGNS LIST

100 base station device; 101 data control unit; 102 OFDM modulation unit; 103 radio unit; 104 scheduling unit; 105 channel estimation unit; 106 DFT-S-OFDM demodulation unit; 107 data extraction unit; 108 upper layer; 200 mobile station device; 201 data control unit; 202 DFT-S-OFDM modulation unit; 203 radio unit; 204 scheduling unit; 205 channel estimation unit; 206 OFDM demodulation unit; 207 data extraction unit; 208 upper layer; A2, A2 antenna unit.

## Claims

1. A mobile station device communicating with a base station device in a mobile communication system, said mobile station device adapted to
obtain an uplink grant from the base station device, and
when said uplink grant is a normal grant, cancel a pending scheduling request, and when said uplink grant is a grant for a contention based uplink, not cancel said pending scheduling request.

2. A mobile station device communicating with a base station device in a mobile communication system, said mobile station device adapted to
obtain an uplink grant from the base station device,
when said uplink grant is a normal grant, cancel a pending scheduling request, and when said uplink grant is a grant for a contention based uplink, not cancel said pending scheduling request, and
when contention resolution of said contention based uplink succeeds, cancel said pending scheduling request.

3. A processing method at a mobile station device communicating with a base station device in a mobile communication system, comprising the steps of:
said mobile station device obtaining an uplink grant from the base station device,
when said uplink grant is a normal grant, canceling a triggered buffer status report, and when said uplink grant is a grant for a contention based uplink, not canceling said triggered buffer status report.

4. A processing method at a mobile station device communicating with a base station device in a mobile communication system, comprising the steps of:
said mobile station device obtaining an uplink grant from the base station device, and
when said uplink grant is a normal grant, canceling a pending scheduling request, and when said uplink grant is a grant for a contention based uplink, not canceling said pending scheduling request.

5. A processing method at a mobile station device communicating with a base station device in a mobile communication system, comprising the steps of:
said mobile station device obtaining an uplink grant from the base station device,
when said uplink grant is a normal grant, canceling a pending scheduling request, and when said uplink grant is a grant for a contention based uplink, not canceling said pending scheduling request, and
when contention resolution of said contention based uplink succeeds, canceling said pending scheduling request.

6. A mobile station device communicating with a base station device in a mobile communication system, said mobile station device adapted to
obtain an uplink grant from the base station device, and
when said uplink grant is a normal grant, cancel a triggered buffer status report, and when said uplink grant is a grant for a contention based uplink, not canceling said triggered buffer status report.
